# EUROPEAN PATENT APPLICATION

(11) **EP 4 140 709 A1**
(43) Date of publication of application: **01.03.2023**
(21) Application number: 21217204.3
(22) Date of filing: 22.12.2021
(51) Int. Cl.: B29C 67/00

(54) **A METHOD OF MARKING CPET FOOD TRAYS AND FOOD PACKAGES**

(30) Priority: 25.08.2021 PL 43881221
(71) Applicant: KGL Spolka Akcyjna, 05-080 Izabelin (PL)
(72) Inventor: Nadra, Andrzej, 05-083 Zaborów (PL); Udzielak, Ireneusz, 04-384 Warszawa (PL); Ptak, Radoslaw, 01-212 Warszawa (PL); Sedek, Sylwia, 05-408 Lipowo (PL)
(74) Representative: Krekora, Magdalena

(57) **Abstract**

A method of marking food trays and containers of CPET film, comprises a forming step with heating engraved forming parts on the bottom and/or side walls of the mould, in which step the container and/or tray rests in the mould 10-12 seconds in the temperature 160 - 200°C and a second forming step, in which step the container and/or tray is moved to a second mould maintained at a constant temperature 12-20°C and undergoes analogous treatment as in the preceding step for 10-12 seconds. In the second step an identical engraving is made and placed in the same place as in the first step, and in the second step a second marking is formed with use of the mould having additional second engraving, and then the sheet of film with formed trays and/or containers undergoes cutting.

## Description

The object of the present invention is a method of marking CPET food trays and containers, adapted for heating the content of the package.

Containers and trays of CPET film are an ideal solution for packing ready prepared meals intended for heating, because the range of work temperature is - 40°C to 200°C. Wide range of temperatures of use allows for freezing of the products, cooling, heating in a microwave oven and in an electric oven.

The film for production of CPET trays is a multilayer non-oriented polyester film obtained by extrusion method using amorphous polyethylene terephthalate. The CPET film is characterized by excellent technical parameters, while maintaining very good material optics. The raw material, from which the film for CPET trays is produced, is resistant to the effects of weak acids, alkaline solutions, oils and fats, therefore the film can be used as a mono packaging being a component of trays for packing food products. The chemical structure of the CPET film generates the appropriate surface tension of the film, and therefore it is possible to print it with both offset and flexographic inks.

Trays and containers made of the CPET film are formed on a production line consisting of successive forming stations with heating of forming parts, forming with cooling of forming parts and cutting.

There are known methods of placing markings in the form of embossing on CPET film trays. Two methods of marking are used. The first consists of making an engraved mark on the bottom and/or side walls of the mould in the forming step with heating of forming parts. The stamp acts from above on the film placed in the mould by stretching it. At the same time, the film is sucked into the mould from below by the generated vacuum, and compressed air is forced in between the stamp and the film from above. The mould is heated to the temperature of 160-200°C, and at this temperature amorphous polyethylene terephthalate crystallizes and, at the same time, the shaping of the container and/or tray takes place. The marking takes the shape of the engraving placed on the mould. The container and/or tray rests in the form for 10-12 seconds. This completes the first step of forming. Then the container and/or tray is transferred to a second mould which is maintained at a constant temperature of 12-20°C and undergoes the same treatment as in the preceding step for 10-12 seconds. This completes the second step of forming. The next step is cutting of the sheet with the containers and/or trays made. Due to the fact that in the second step of forming the mould does not have an engraving, the marking flattens and becomes less visible. The container and/or tray filled with a food product intended to be heated and/or baked in an oven is launched on the market. The user exposes the meal to high temperature. Markings on the bottom and/or sides remain on the container after heating. These markings comprise commercial information indifferent to the user.

Another way to prevent the marking from flattening is to carry out the process as above, wherein in the second forming step the mould has an engraving analogous as the mould in the first step. Markings on the bottom and/or sides remain on the container after heating.

There is a need for obtaining a tray and/or a container which, when heated, have a different marking than the original one. Trays and/or containers intended only for heating in a microwave oven may have a marking, which will change in a short time and at moderate temperature. Such a marking may be an inscription UNREADY, which will change after heating to READY, informing the user that the expected temperature has been reached. In the case of meals that require baking in an oven, such an inscription will not achieve the goal, as part of the inscription UN will disappear much earlier than the time required to bake the meal. A use can be found for such meals in the case of children, who show reluctance to eat certain meals. This is also the case for microwave-heated baby food. In this case, placement of alternating text or graphic can attract children and encourage them to eat. For example, the words "HUNGRY?!?!?!" NO "when heated it would change to" HUNGRY! ! ! ". The graphic with a sad and happy face would change and only the smiling face would remain visible.

The object of the present invention is to obtain a marking on a food tray and/or container made of CPET, intended for reheating and/or baking meals, having a marking that partially does not disappear and partially disappears under the influence of temperature.

A method of marking food trays and containers from CPET film, consists in that at the step with heating forming parts, an engraved marking is made on the bottom and/or side walls of the mould. The stamp acts from above on the film placed in the mould by stretching it. At the same time, the film is sucked into the mould from below by the generated vacuum, and compressed air is forced in between the stamp and the film from above. The mould is heated to the temperature of 160-200°C, and at this temperature amorphous polyethylene terephthalate crystallizes and, at the same time, the shaping of the container and/or tray takes place. The marking takes the shape of the engraving placed on the mould. The container and/or tray rests in the form for 10-12 seconds. This completes the first step of forming. Then the container and/or tray is transferred to a second mould which is maintained at a constant temperature of 12-20°C and undergoes the same treatment as in the preceding step for 10-12 seconds, wherein in the mould there is an identical engraving made and placed in the same place as in the first step, and there is a second engraving. This completes the second step of forming. The next step is cutting of the sheet with the containers and/or trays made. It turned out, that if the marking made in the first step is supplemented in the second step by a second word and/or graphic part, a part of marking formed in the second step disappears under the influence of temperature. The marking provides alternating information. The information produced on the tray and/or the container may be placed on the bottom and/or sides of the container as well as the information may be the same and/or different on different parts of the product.

### Example 1.

A method of marking food trays and containers from CPET film, consists in that at the step with heating engraved forming parts, an engraving is made on the bottom and two opposite side walls of the mould. The stamp acts from above on the CPET film placed in the mould by stretching it. At the same time, the film is sucked to the mould from below by the generated vacuum, and compressed air is forced in between the stamp and the film from above. The mould is heated to the temperature of 160°C, and at this temperature amorphous polyethylene terephthalate crystallizes and, at the same time, the shaping of the container. The marking takes the shape of the engraving placed on the mould. The container rests in the form for 10 seconds. This completes the first step of forming. Then the container is transferred to a second mould which is maintained at a constant temperature of 18°C and undergoes the same treatment as in the preceding step for 10 seconds, wherein in the mould there is an identical engraving made and placed in the same place as in the first step, and there is a second engraving. This completes the second step of forming. The next step is cutting of the sheet with the containers and/or trays made. In the first step the mould had an engraving READY. In the second step the mould had analogous and placed in the same place of the mould engraving READY and additional engraving UN. Both engravings created inscription UNREADY. As the result of the process a convex inscription UNREADY was created, informing that the meal is not ready for consumption. After heating of the meal in a microwave oven for 2 minutes and temperature of 100°C the part of the inscription UN disappeared providing information, that the meal is ready for consumption.

### Example 2.

The procedure was as in example 1, wherein in the first step the engraving was in the form of an emoticon with a smiling face, and in the second step the engraving in the form of a second line in the opposite direction was added, which resulted in the creation of a surprise emoticon. After baking the dish in an oven, the top line of the mouth disappeared creating a smile. The meal has become more attractive for children.

### Example 3.

The procedure was as in example 1, wherein the engravings were place on the bottom of the mould and consisted of inscriptions GOTOWE and NIEGOTOWE. After heating and/or baking the meal on the tray an inscription GOTOWE was left.

### Example 4.

A tray was manufactured as in the example 1, wherein in the first stage the engraving had a form of an inscription EAT ME on the side wall of the tray, and in the second stage HEAT ME. After heating the tray in the oven at a temperature 90°C for 20 minuts letter H disappeared leaving inscription EAT ME. The solution becomes attractive for meals requiring heating at temperatures not exceeding 90-100°C.

## Claims

1. A method of marking food trays and containers of CPET film, comprising forming step with heating engraved forming parts on the bottom and/or side walls of the mould, in which step the container and/or tray rests in the mould 10-12 seconds in the temperature 160 - 200°C and second forming step, in which step the container and/or tray is moved to a second mould maintained at a constant temperature 12-20°C and undergoes analogous treatment as in the preceding step for 10-12 seconds, wherein there is an identical engraving placed in the same place in the mould as in the first step, and then the sheet of film with formed trays and/or containers undergoes cutting, **characterized in that**, in the second step a second marking is formed with use of the mould having additional second engraving.

2. The method according to claim 1, **characterized in that**, the markings are produced on the tray and/or the container on their bottom and/or on their sides.

3. The method according to claim 1, **characterized in that**, different markings are produced on different parts of the product.
